# EUROPEAN PATENT SPECIFICATION

(11) **EP 4 478 035 B1**
(45) Date of publication and mention of the grant of the patent: **28.10.2026**
(21) Application number: 23868523.4
(22) Date of filing: 18.09.2023
(51) Int. Cl.: G01N 21/88, G06T 7/00, G06T 7/11, G06T 7/90, G06T 5/00, G06T 3/40, G06V 10/25

(54) **APPARATUS AND METHOD FOR INSPECTING EXTERNAL APPEARANCE OF PRODUCT**
VORRICHTUNG UND VERFAHREN ZUR INSPEKTION DES ÄUSSEREN ERSCHEINUNGSBILDES EINES PRODUKTS
APPAREIL ET PROCÉDÉ POUR L'INSPECTION DE L'ASPECT EXTÉRIEUR D'UN PRODUIT

(30) Priority: 19.09.2022 KR 20220117571; 31.07.2023 KR 20230099316
(43) Date of publication of application: 18.12.2024
(73) Proprietor: LG Energy Solution, Ltd., Seoul 07335 (KR)
(72) Inventor: JEON, Hyoseung, Daejeon 34122 (KR); KIM, Tae Young, Daejeon 34122 (KR)
(74) Representative: Goddar, Heinz J.
(86) International application number: PCT/KR2023/014038
(87) International publication number: WO 2024/063471

(56) References cited:
- JP-A- 2009 294 087
- JP-A- 2010 066 126
- JP-A- 2021 131 359
- JP-A- 2021 131 359
- JP-A- H09 264 728
- KR-A- 20220 060 080
- KR-A- 20220 060 080
- US-A1- 2002 094 120
- US-A1- 2013 322 735
- US-B1- 6 865 288

## Description

### [Technical Field]

The present invention relates to an apparatus and method for inspecting appearance of products, and more particularly, to an apparatus and method for inspecting appearance of products, which processes an inspection image by adjusting brightness of an inspection area in the image.

### [Background Art]

Secondary batteries, capable of recharging and reuse may be used as an energy source for small devices such as mobile phones, tablet PCs, and vacuum cleaners and may also be used as energy source for a medium-to-large devices, such as personal mobility, automobiles, and an energy storage system (ESS) for smart grids. Secondary batteries may used in the form of an assembly such as a battery module in which a plurality of battery cells are connected in series or parallel, or a battery pack in which a plurality of battery modules are connected in series or parallel, depending on the requirements of the system.

Batteries may be manufactured through processes including an electrode process, an assembly process, a formation process, and other processes, and defects are checked for manufactured battery cells or the results of each process using inspection equipment. Among defect inspection methods, one of the commonly used techniques is appearance inspection. The appearance inspection may be done by obtaining images of a product using an optical system and detecting defects using a detection algorithm.

However, the brightness of the obtained image may become different from originally expected brightness of the image due to changes in surface color of the product or changes in lighting due to the end of the life of lighting, after a specific detection algorithm is determined. In this case, a problem arises with the detection ability of the predetermined algorithm.

JP 2021-131359 A discloses: To provide a luminance correction device, an inspection device, and a method for correcting a luminance which correct the luminance of an image on the basis of the average value of the luminances of two images to compare and a standard deviation. SOLUTION: A luminance correction device of the disclosure includes: a first acquisition unit for acquiring a first average value of the luminance in a first image region including correction pixels in the first image pixel and acquiring a first standard deviation; a second acquisition unit for acquiring a second average value of the luminance in a second image region corresponding to the first image region, in the second image to compare with the first image, and acquiring a second standard deviation; and a correction unit for correcting the luminance of the correction pixels on the basis of the first average value, the first standard deviation, the second average value, and the second standard deviation.

### [Detailed Description of the Invention]

### [Technical Problem]

To obviate one or more problems of the related art, embodiments of the present disclosure provide an appearance inspection method of a product that processes an inspection image by adjusting the brightness of the inspection area in the image to a predetermined value.

To obviate one or more problems of the related art, embodiments of the present disclosure also provide an appearance inspection apparatus using the appearance inspection method of a product.

### [Technical Solution]

The invention is set out in the appended claims. In order to achieve the objective of the present disclosure, a method is defined in claim 1.

The calculating a correction gain value based on the calculated average brightness and target brightness may include calculating the correction gain value by dividing the target brightness by the average brightness.

The correcting brightness of each pixel according to the correction gain value may include multiplying original brightness of each pixel by the correction gain value to correct the brightness of each pixel.

The calculating the average brightness of pixels within the extracted region of interest may include calculating the average brightness based on the number of pixels in the region of interest and brightness of each pixel.

Here, the target brightness may be determined by a user.

The performing brightness correction on the extracted region of interest may include changing a captured color image to a gray image before applying brightness correction to the captured color image.

According to another embodiment of the present disclosure, an appearance inspection apparatus of a product, the apparatus may include at least one processor; and a memory configured to store at least one instruction executed by the at least one processor, and the at least one instruction may include an instruction to obtain and pre-process an image of appearance of a target object; an instruction to extract a region of interest from the preprocessed image and to perform brightness correction on the extracted region of interest; an instruction to extract defective candidates from the brightness-corrected image; an instruction to perform image post-processing on the extracted defective candidates; and an instruction to determine whether the target object is defective from the post-processed image.

The appearance inspection apparatus according to embodiments of the present invention may cooperate with an imaging device capturing appearance of the target object, or the appearance inspection apparatus may include the imaging device.

The instruction to perform brightness correction on the extracted region of interest may include an instruction to calculate an average brightness of pixels within the extracted region of interest; an instruction to calculate a correction gain value based on the calculated average brightness and target brightness; and an instruction to correct brightness of each pixel according to the correction gain value.

The instruction to calculate a correction gain value based on the calculated average brightness and target brightness may include an instruction to calculate the correction gain value by dividing the target brightness by the average brightness.

The instruction to correct brightness of each pixel according to the correction gain value may include an instruction to multiply original brightness of each pixel by the correction gain value to correct the brightness of each pixel. The instruction to calculate the average brightness of pixels within the extracted region of interest may include an instruction to calculate the average brightness based on the number of pixels in the region of interest and brightness of each pixel.

Here, the target brightness may be determined by a user.

Meanwhile, the instruction to perform brightness correction on the extracted region of interest may include an instruction to change a captured color image to a gray image before applying brightness correction to the captured color image.

The instruction to perform brightness correction on the extracted region of interest may include an instruction to separate the color image into R channel, G channel, and B channel, before applying brightness correction to a captured color image.

Therefore, the instruction to calculate the average brightness of pixels, the instruction to calculate the correction gain value, and the instruction to correct the brightness of each pixel may be performed for each of the R channel, G channel, and B channel.

### [Advantageous Effects]

According to the embodiment of the present invention as described above, average brightness of an inspection target area (Region of Interest: ROI) is calculated and corrected to a specified brightness, and thus, an image of uniform brightness can be obtained even if lighting situation of an optical system changes.

Therefore, inspection accuracy for determining whether a product is defective can be increased.

### [Brief Description of the Drawings]

FIG. 1 is an operation flowchart of a general appearance inspection method.
FIG. 2 is an operation flowchart of an appearance inspection method according to embodiments of the present invention.
FIG. 3 is a diagram showing a detailed process of brightness correction according to embodiments of the present invention.
FIG. 4 is a diagram showing an image resulting from brightness correction according to embodiments of the present invention compared with the original image.
FIG. 5 is an example of a user interface screen provided for appearance inspection according to embodiments of the present invention.
FIGS. 6a to 6c are graphs comparing appearance inspection results using an image with brightness correction according to embodiments of the present invention and an image without brightness correction.
FIG. 7 shows images measured and processed with various illumination intensities and various correction target brightnesses according to embodiments of the present invention.
FIG. 8 is a graph showing detection size deviation between the contamination size detected by performing brightness correction according to the present invention and the inspection result through a microscope.
FIG. 9 is a perspective view of an imaging device according to embodiments of the present invention.
FIG. 10 is a cross-sectional view of an imaging device according to embodiments of the present invention.
FIG. 11a is a diagram showing the appearance of an imaging device according to another embodiment of the present invention.
FIG. 11b is a diagram showing a multi-channel lighting configuration of an imaging device according to another embodiment of the present invention.
FIG. 12 is a block diagram of an appearance inspection apparatus according to embodiments of the present invention.
1000: appearance inspection apparatus
1010: processor
1020: memory
1040: input interface
1050: output interface
1060: storage device

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the FIG. s.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

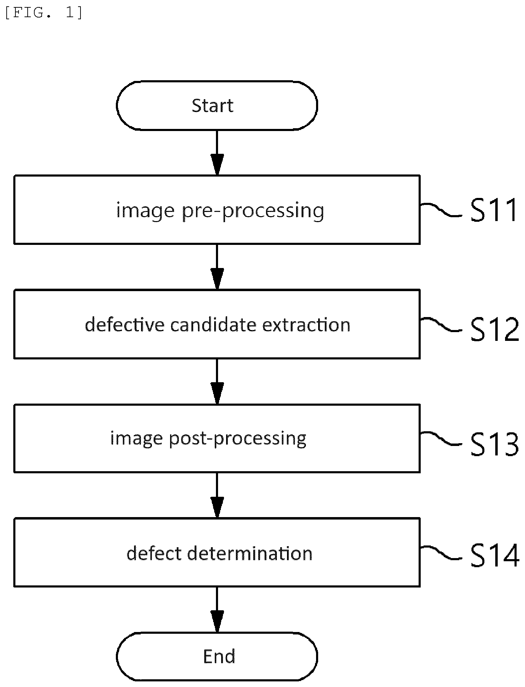

FIG. 1 is an operation flowchart of a general appearance inspection method.

A general appearance inspection method for a part or a product may include image pre-processing process (S11), defective candidate extraction process (S12), image post-processing process (S13), and defect determination process (S14).

Parts/products subject to inspection may be acquired as image data through an imaging device (photography device), which is an optical system, and one or more objects related to a plurality of parts/products may be included in one image.

The image pre-processing process (S11) is a process of emphasizing features of an image of a target object to facilitate inspection before inspection, and methods such as binarization and normalization may be used as image pre-processing. The image pre-processing process may also include overall amplification of brightness of the image for the target object.

In the defective candidate extraction process (S12), a group of candidates suspected to be defective is extracted from a plurality of objects included in a detected image. Objects with potential defective characteristics appearing in the image may be selected as candidates.

In the image post-processing process (S13), feature values of defective candidates are extracted. Here, feature values may be values related to brightness (intensity), shape, texture, etc. of objects included in the image.

In the defect determination process (S14), the extracted feature values are analyzed to determine whether a defect or anomaly has occurred in the product/part related to the object.

In the general appearance inspection method described above, the brightness amplification included in the image pre-processing process is performed by randomly amplifying the overall brightness of the image. According to this method, the brightness of the image may not be uniformly corrected to a desired brightness, and thus, the brightness correction value must be adjusted differently for each image.

As a result, when the brightness changes due to the end of the life of lighting or when there is a deviation in color of some of the cell materials, inspection results according to a conventional method may be changed, and thus, proper inspection results cannot be obtained.

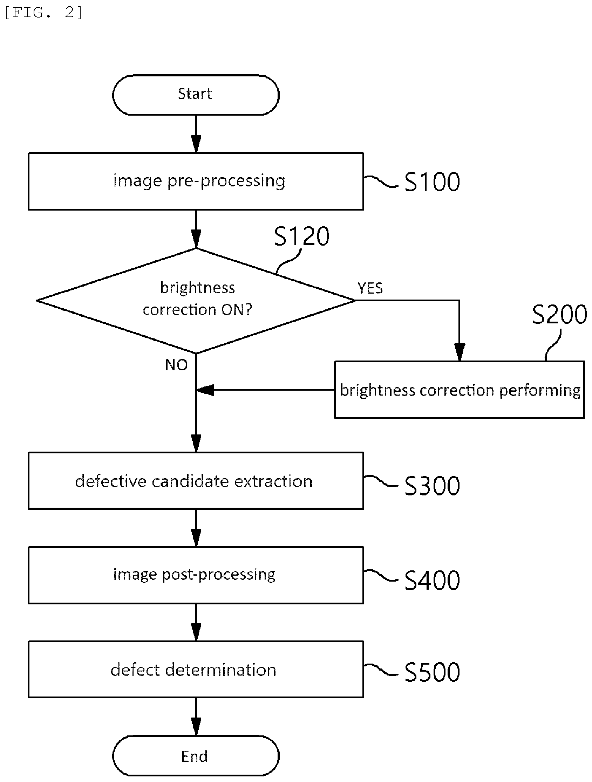

FIG. 2 is an operation flowchart of an appearance inspection method according to embodiments of the present invention.

The appearance inspection method of a product according to embodiments of the present invention may include image pre-processing process (S100), brightness correction process (S200), defective candidate extraction process (S300), image post-processing process (S400), and defect determination process (S500).

Images of parts/products subject to inspection may be acquired through an imaging device, which is an optical system, and one or more objects related to a plurality of parts/products may be included in one image.

The image pre-processing process (S100) is a process of emphasizing features of an image of the target object to facilitate inspection before inspection and converting the image acquired through the imaging device through the process of correcting or compositing so that defects can be easily identified. The preprocessing process may use methods such as image synthesis, binarization, normalization, blur processing, and stretching.

Here, image synthesis may be particularly useful for detecting defects such as dents and scratches by representing a sense of depth in the image using a multi-channel image, which will be discussed later. In particular, photometric stereo synthesis and phase shift synthesis may be used as image synthesis methods.

In addition, binarization is a process that resets pixel values of object and background in an image to only two values, which are 1 and 0. Through image correction using binarization, defects in appearance of a product may be converted to be clearly visible. Furthermore, normalization is a process that makes pixel values which are concentrated in a specific part of an image evenly distributed over the entire area. Blur processing may also be called smoothing and can be used to smooth out rough images or as a preprocessing process to remove the effects of noise present in the image. In addition, stretching may be used as a preprocessing method to compensate for distorted images.

According to embodiments of the present invention, the brightness correction process (S200) may be applied to a preprocessed image and the brightness correction process (S200) may be executed according to a user's needs. In other words, referring to FIG. 2, the brightness correction process (S200) may be performed in the instance that the brightness correction process is set to ON (example of S120). In the brightness correction process (S200), an average brightness of a region of interest may be calculated and the region of interest may be corrected to specified brightness. Here, the Region of Interest (ROI) may represent an area where actual inspection is to be performed in the inspection image.

Meanwhile, the process of performing brightness correction on a color image according to embodiments of the present invention may be implemented in two ways.

The first method is to change a color image to a black and white image, which means changing a color image to a gray image and setting a target intensity to correct brightness.

The second method is to correct brightness by setting a target brightness for each RGB channel in the color image. In other words, the target brightness may be set separately for Red (R) channel, Green (G) channel, and Blue (B) channel of the color image and the brightness may be corrected for each channel. Here, the processes for calculating the average brightness, calculating the gain value, and calculating the corrected brightness value for each pixel may be separately performed for each channel.

In the defective candidate extraction process (S300), a group of candidates suspected to be defective is extracted from a plurality of objects included in the detected image. Objects with potential defective characteristics appearing in the image may be selected as candidates.

In the defective candidate extraction process (S300), a group of defective candidates may be extracted using the brightness difference within the brightness-corrected region of interest (ROI). For example, a defective candidate group may be extracted by determining whether each pixel in the ROI expressed in grayscale has brightness above a certain threshold or not and distinguishing whether it is a shade area or not.

Here, various techniques such as adaptive, dynamic, polar, and local threshold techniques may be used as examples of threshold techniques.

The image post-processing process (S400) is a process of extracting feature values of defective candidates, and quantitatively calculates representative features such as brightness, shape, size of the extracted defective candidates. In other words, the feature values of the defective candidate group may be values related to intensity, shape, texture, etc. of objects included in the image.

In more detail, the feature values for defective candidates may include area, width, height, circularity, rectangularity, and struct factor of the shape. Regarding the length or size of the defect, the size of the defective candidate group may be determined by an outer diameter of the maximum circumscribed circle or by using area of the defect. In general, foreign matter or contamination has a characteristic of appearing dark in brightness compared to its surrounding area. Thus, this characteristic may be used to extract a corresponding area and the size and area of the dark area may be used to determine whether it is defective. For example, since scratches or chafing marks have a straight shape, the scratches or chafing marks can be distinguished from foreign substances, such as strings, by using a structure factor (struct factor) that quantifies the characteristics of a straight line.

In the subsequent defect determination process (S500), the extracted feature values are analyzed and it is determined whether a defect or anomaly has occurred in a product/part related to the object according to a predetermined detection standard.

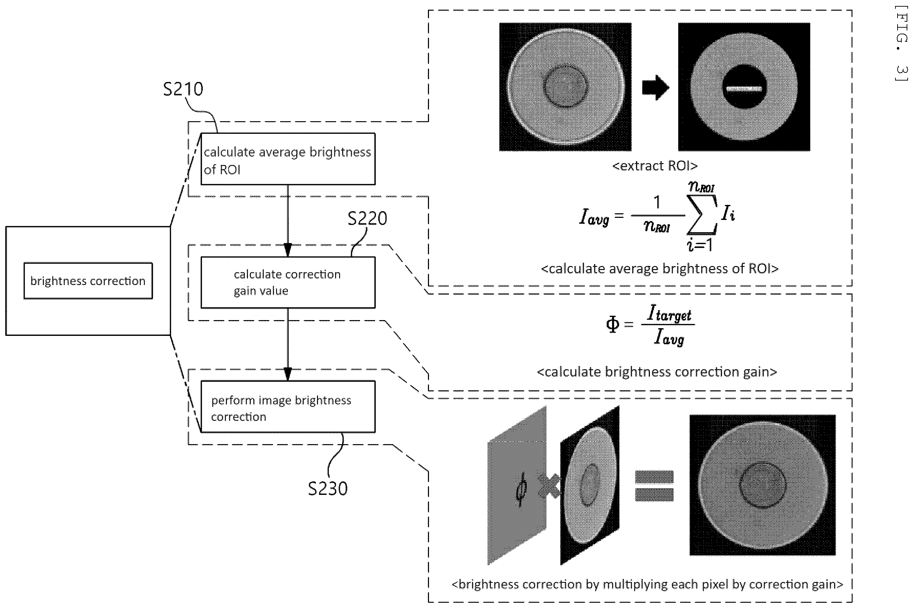

FIG. 3 is a diagram showing a detailed process of brightness correction according to embodiments of the present invention.

A region of interest (ROI) is extracted from the captured image and average brightness of pixels within the extracted region of interest is calculated (S210). The average brightness of pixels within the region of interest may be calculated according to Equation 1 below. [Equation 1] ${I}_{avg} = \frac{1}{{n}_{ROI}} {\sum }_{i = 1}^{{n}_{ROI}} {I}_{i}$

In Equation 1, I_{avg} represents the average brightness of pixels in the region of interest, Iᵢ represents brightness of the ith pixel, and n_{ROI} represents a number of pixels in the ROI.

Once the average brightness of the region of interest is calculated, a correction gain value may be calculated by considering target brightness (S220). The correction gain value may be calculated according to Equation 2 below. Here, the target brightness I_{target} may be predefined by a user. [Equation 2] $ϕ = \frac{{I}_{target}}{{I}_{avg}}$

In Equation 2, ϕ represents the brightness correction gain, and I_{target} represents the correction target brightness, which may be defined in advance by a user and re-set through a user interface.

Afterwards, image brightness correction may be performed by multiplying the original brightness value of each pixel by the correction gain value to obtain a corrected brightness value for each pixel (S230).

On the other hand, when correcting brightness by setting correction target brightness for each R, G, B channel in a color image, the average brightness calculation process, the gain value calculation process and the corrected brightness value calculation process for each pixel may be performed separately for each channel (Red (R) channel, Green (G) channel, Blue (B) channel).

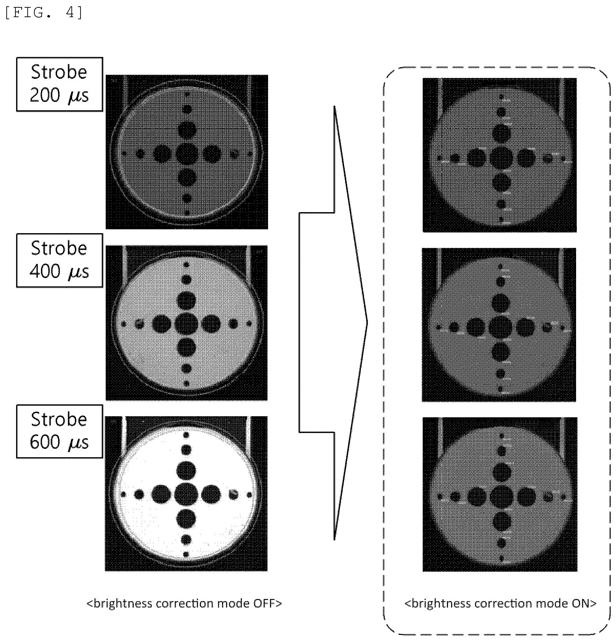

FIG. 4 is a diagram showing an image resulting from brightness correction according to embodiments of the present invention compared with the original image.

The object of the appearance inspection according to the present invention may be cylindrical, pouch-shaped, or square-shaped batteries, especially, cylindrical batteries of various specifications. As an example, a cylindrical battery may include an electrode assembly, a battery can, a cap having a plate shape, and a terminal. The cylindrical battery may additionally include an insulating gasket, a current collector plate, an insulator, a sealing gasket, etc.

The images shown in FIG. 4 are obtained, for experiment, by photographing circular patterns of various sizes printed on the upper surface of a cylindrical battery specimen for creating a contamination effect.

In FIG. **4****,** the three images on the left show images captured with different brightnesses of illumination, **i.e.,** 200µS of strobetime, 400µS of strobetime, and 600µS of strobetime, in the instance that brightness correction according to the present invention is not used **(i.e.,** brightness correction mode OFF). The three images on the right show images captured at different brightnesses of lighting in the instance that brightness correction according to the present invention is used (i.e., brightness correction mode ON). Here, the strobetime is a unit representing time during which the light is turned on, and as the value of the strobetime increases, the time during which the light is turned on increases.

The brightnesses of three captured images on the left that do not use brightness correction mode are proportional to strobe time values. In other words, the three images on the left did not use the brightness correction mode, so the difference in brightness between the three images is clearly visible. On the other hand, in the case of the three images on the right where brightness correction is performed according to the present invention, the brightness difference among the three images is so small that the difference cannot be identified with the naked eye.

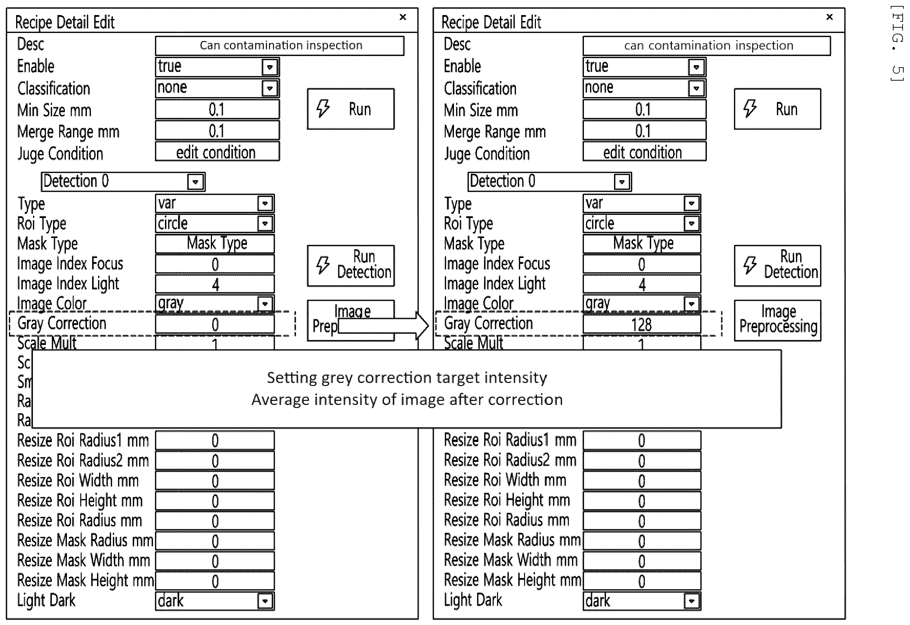

FIG. 5 is an example of a user interface screen provided for appearance inspection according to embodiments of the present invention.

The appearance inspection apparatus according to embodiments of the present invention may provide a user interface by which inspection-related details can be set. Inspection-related details may include an object/product to be inspected, whether or not brightness correction is performed, and intensity of brightness correction.

The appearance inspection shown in the user interface screen of FIG. 5 is a contamination inspection of a battery can, and a user may directly set items such as whether brightness correction is performed and target intensity (gray correction target intensity).

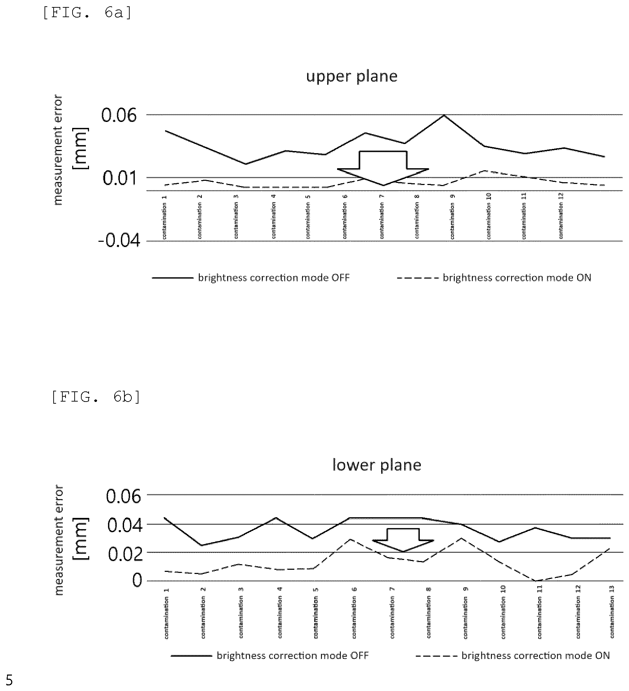

FIGS. 6a to 6c are graphs comparing appearance inspection results using an image with brightness correction according to embodiments of the present invention and an image without brightness correction.

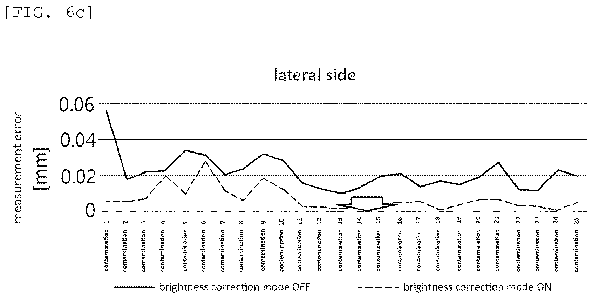

FIG. 6a shows inspection results for an upper plane of the battery, FIG. 6b shows inspection results for a lower plane of the battery, and FIG. 6c shows inspection results for a lateral side of the battery.

The experiments shows that a measurement error (unit: mm) is improved in all three cases when automatic brightness correction is performed (green graph) compared to when automatic brightness correction is not performed (red graph), which presents an improvement effect of 60% on average.

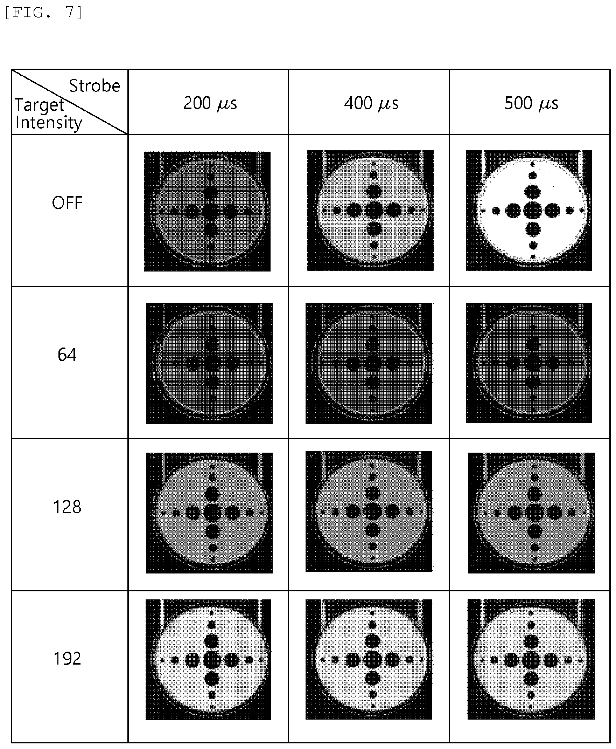

FIG. 7 shows images measured and processed with various illumination intensities and various correction target brightnesses according to embodiments of the present invention.

More specifically, FIG. 7 shows resulting images of multiple contaminants of various sizes randomly placed on the upper surface of a cylindrical battery for experiment under three illumination intensities (strobe time 200µS, strobe time 400µS, strobe time 600µS), and different correction target brightness (correction mode OFF, correction target 64, 128, 192).

For images that do not use brightness correction mode, the strobe time value is proportional to the brightness of the captured image. In cases where brightness correction according to the present invention is used, it can be understood that the image brightness after correction has been adjusted within a certain range.

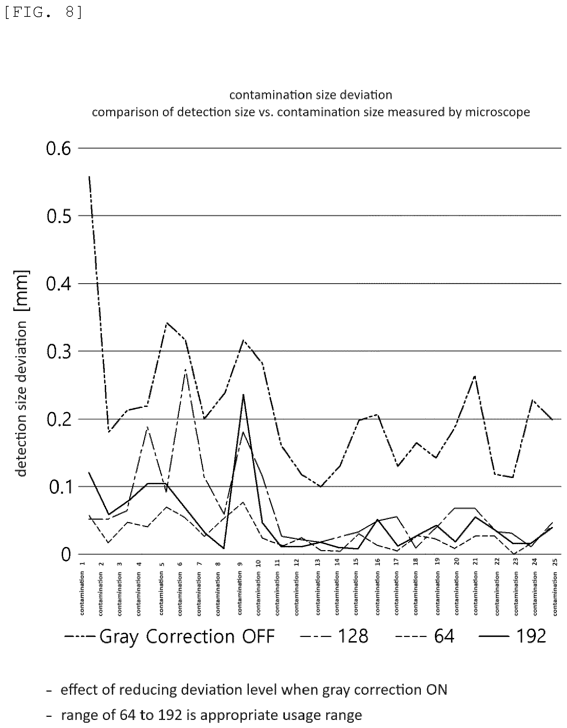

FIG. 8 is a graph showing detection size deviation between the contamination size detected by performing brightness correction according to the present invention and the inspection result through a microscope.

More specifically, FIG. 8 shows differences between measurement inspection results using a microscope and the sizes of contamination detected by performing brightness correction according to embodiments of the present invention on images of a number of contaminations (pollutions 1 to 25) randomly set and placed for the experiment.

The example in FIG. 8 shows a case where brightness correction using gray scale is used among the brightness correction techniques. Three graphs show the deviation of the contamination size when the target brightness of brightness correction is set to 128, 64, and 192, respectively, compared to the contamination size measured through a microscope. FIG. 8 also shows the contamination size deviation when brightness correction is not used (Gray Correction OFF) as a comparative example. Comparing the graphs in FIG. 8, it is understood that when brightness correction is used, that is, when gray correction is used (Gray Correction ON), level of deviation in size of detected contamination is reduced. In addition, as a result of conducting an experiment by setting the target brightness to various values, it is understood that brightness values of 64 to 192 is an appropriate use range.

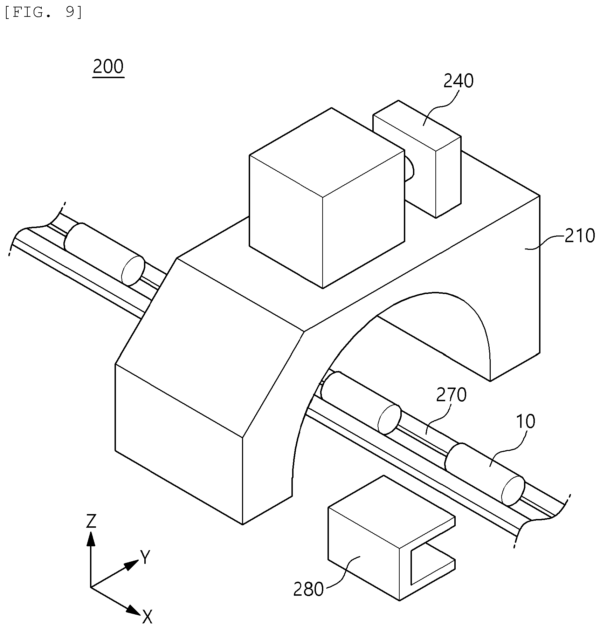

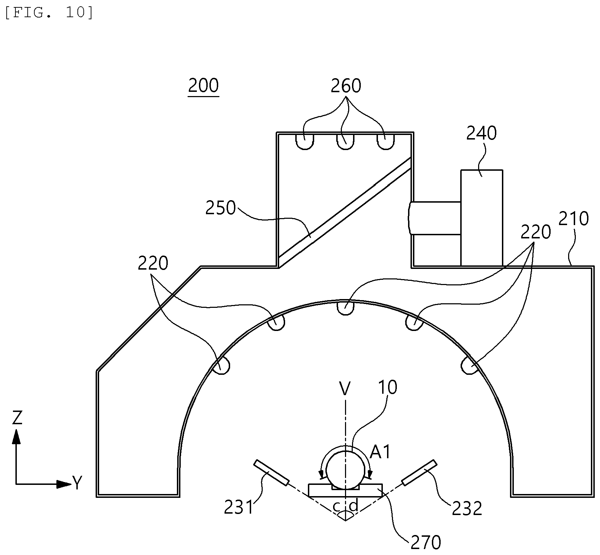

FIG. 9 is a perspective view of an imaging device according to embodiments of the present invention and FIG. 10 is a cross-sectional view of an imaging device according to embodiments of the present invention.

Referring to FIGS. 9 and 10, the imaging device 200 according to embodiments of the present invention may include at least one of a housing 210, a first lighting 220, a first mirror 231, a second mirror 232, and a camera 240, a third mirror 250, a second lighting 260, a transfer means 270, and a reversing means 280.

In the example of FIG. 9, the housing 210 is disposed on a side of the battery 10 and surrounds at least the first area A1 of the battery 10. For example, as shown in FIG. 9, the battery 10 may be placed in a lying position with its side facing upward, and the housing 210 may be placed above of the battery 10. The shape of the housing 210 is not limited to a particular shape, but the inner surface of the housing 210 may have a dome shape.

The first lighting 220 is disposed on the inner surface of the housing 210 and radiates light to the battery 10. In FIG. 10, the first lighting 220 is shown as being protruding and disposed on the inner surface of the housing 210. However, the first lighting 220 may be embedded in the inner surface of the housing 210 and arranged so that at least a portion of the first lighting is exposed. Specifically, the first lighting 220 may radiate light to a lateral side of the battery 10. The first lighting 220 may radiate light to the entire first area A1 of the battery 10. As described above, the inner surface of the housing 210 may have a dome shape and the first lighting 220 disposed on the inner surface of the housing 210 may be arranged in an overall round shape to emit light to the lateral side of the battery 10.

The first mirror 231 and the second mirror 232 may be disposed on both sides of the battery 10 to reflect a portion of the first area A1 of the battery 10, respectively. Referring to FIG. 10, a first mirror 231 may be disposed on the left side of the battery 10 and a second mirror 232 may be disposed at an angle on the right side of the battery 10.

Meanwhile, the camera 240 photographs at least a portion of the first area A1 of the battery 10, an image reflected on the first mirror 231, and an image reflected on the second mirror 232. In other words, the camera 240 photographs at least a portion of the first area A1 of the battery 10. Here, a portion of the first area A1 reflected in the first mirror 231 or the second mirror 232 include all areas, in the first area A1, that cannot be photographed with the camera 240 if either of the first mirror 231 and the second mirror 232 is not disposed. Accordingly, the image captured by the camera 240 may include an image of the entire first area A1 of the battery 10 due to the presence of the first mirror 231 and the second mirror 232. Through this, the imaging device 200 according to the present invention may perform side inspection of the battery by acquiring an appearance image of the entire area of the first area A1, which is more than half of the lateral side of the battery 10, at once, without rotating or rolling the battery 10.

Meanwhile, the imaging device 200 may further include a third mirror 250 if the camera 240 is not properly disposed facing the side 200S of the battery 10 enough to directly photograph at least a portion of the first area A1 of the battery 10, an image reflected by the first mirror 231, and an image reflected by the second mirror 232. Here, the camera 240 may indirectly capture at least a portion of the first area A1, the image reflected in the first mirror 231, and the image reflected in the second mirror 232 by photographing an image reflected in the third mirror 250. In other words, the camera 240 may capture at least a portion of the first area A1 of the battery 10 reflected in the third mirror 250, the image reflected in the first mirror 231, and the image reflected in the second mirror 232.

The third mirror 250 may be disposed at an angle on a side 200S of the battery 10, reflecting at least a portion of the first area A1 of the battery 10, an image reflected by the first mirror 231, and an image reflected by the second mirror 232. In reference to the drawing, the third mirror 250 may be tilted and disposed to face between the Y direction (Y) and the Z direction (Z). The third mirror 250 may be arranged such that at least a portion of the first area A1 of the battery 10, the image reflected on the first mirror 231 and the image reflected on the second mirror 232 are incident and reflected at an angle of about 45°. Here, the camera 240 may be placed facing the light reflected in the third mirror 250.

Meanwhile, the imaging device 200 may include a second lighting 260 in addition to the first lighting 220. The second lighting 260 may be disposed on the third mirror 250 and radiate light to the battery 10, and may be a coaxial lighting.

In addition, the transfer means 270 may transfer the battery 10 in the axial direction (X) of the battery 10 so that the battery 10 passes through the housing 210. The battery 10 may be transported through the transfer means 270, reach the inspection area within the housing 210, stop for a certain period of time, and may be photographed by the camera 240 so that a side inspection of the battery 10 can be performed. The battery 10 on which the inspection has been done may be transferred to a subsequent process through the transfer means 270.

Meanwhile, the reversing means 280 may overturn the battery 10 which has been photographed by the camera 240. In other words, the reversing means 280 may rearrange the battery 10 in a 180° rotated state. Referring to the drawings, the reversing means 280 may turn the battery 10 upside down in the Z direction (Z). Accordingly, the side inspection may be performed on the opposite side of the battery 10 on which the side inspection has not been performed using the same device as the above-described imaging device 200. Since the first area A1 being inspected is more than half of the side 200S of the battery 10, some of the inspection areas may overlap during the first side inspection and second side inspection.

Here, the side inspection of the opposite side of the battery 10 on which the side inspection has not been performed may be performed using a separate imaging device 200 to ensure a smooth flow of the process. In other words, the imaging device 200 may include a pair of imaging devices 200 for inspecting both sides of the battery 10, respectively. However, in order to reduce costs, a side inspection may be performed on both sides of the battery 10 using a single imaging device 200.

Meanwhile, when inspecting lateral side appearance of a cylindrical battery, images are acquired by rotating or rolling the battery 360° in general. When the battery is rotated or rolled, noise in the images occurs, which lowers image quality and detection power of the inspection device. Additionally, the farther away from the center of photographing, the more difficult to secure visibility of defects due to shadows caused by a curved surface.

The imaging device 200 according to embodiments of the present invention include a first mirror 231 and a second mirror 232, thereby obtaining entire image of the first area A1, which is more than half of the side 200S of the battery 10, through one shot. In other words, it is possible to inspect the entire surface of the side of the battery 10 by performing two inspections on one side and the other side of the battery 10. In addition, sufficient visibility of defects can be secured even in areas far from the center of the first area A1 for inspection. Through this, it is possible to provide an imaging device that can inspect the side appearance of a cylindrical battery without rotating or rolling it. Additionally, it is possible to provide an imaging device that can prevent image noise and improve image quality and detection power of the inspection device.

Meanwhile, the imaging device according to the embodiment described with reference to FIGS. 9 and 10 has a structure suitable for inspecting a lateral side of a battery and is presented as an example of the imaging device according to embodiments of the present invention.

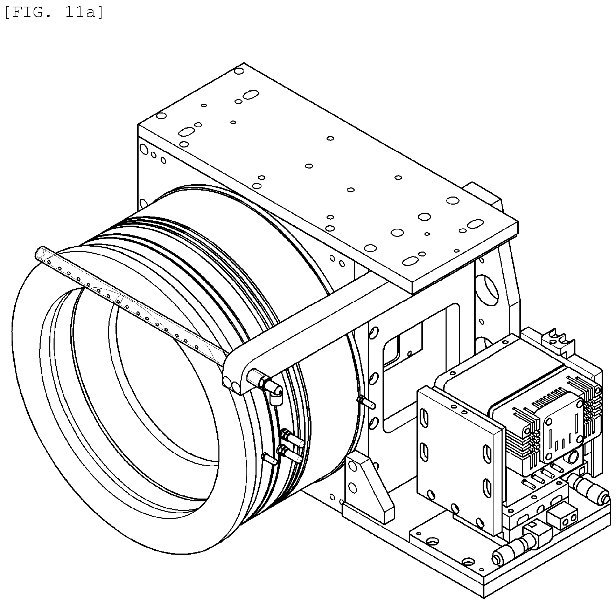

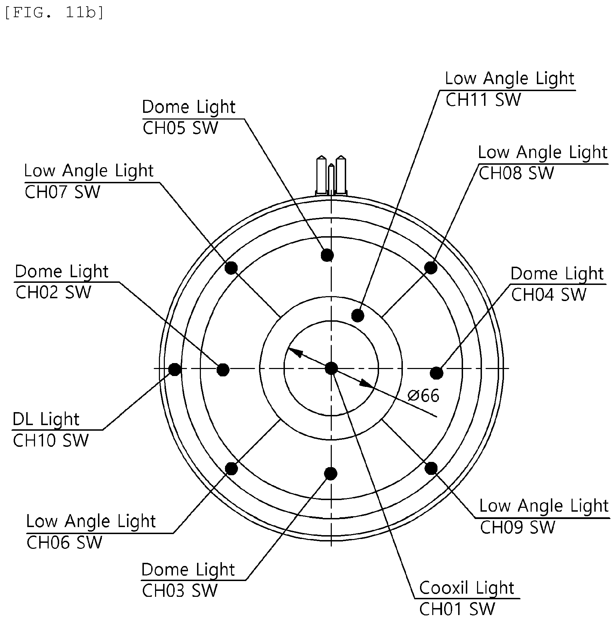

FIG. 11a is a diagram showing the appearance of an imaging device according to another embodiment of the present invention and FIG. 11b is a diagram showing a multi-channel lighting configuration of an imaging device according to another embodiment of the present invention.

The imaging device shown in FIG. 11a has a structure suitable for acquiring images of the upper surface and lower surface of the battery, such as the rivets and vents of a battery cell and uses a multi-lighting device as shown in FIG. 11b. Various images under various lighting conditions can be acquired using the multi-lighting device shown in FIG. 11b. Here, the multi-lighting device may include, for example, dome lighting, low angle lighting, coaxial lighting, ring lighting, and dark field lighting. As described above, the imaging device according to the present invention may include structures for capturing images of various parts of the battery cell, such as the top and bottom surfaces of the battery and the side surface of the battery.

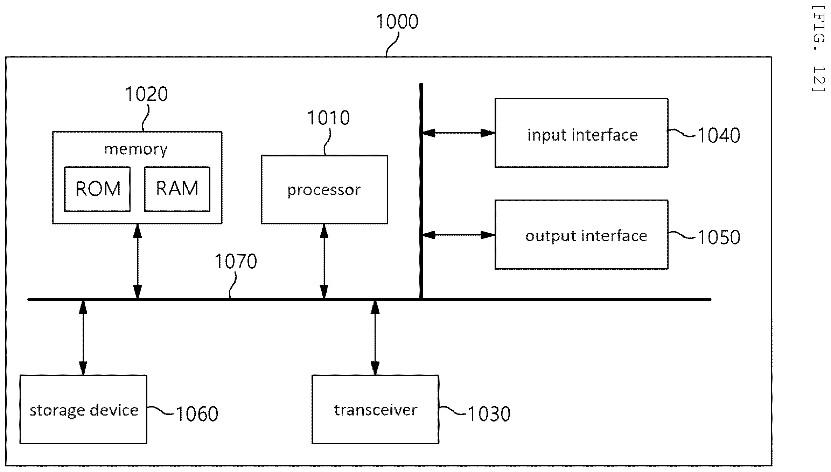

FIG. 12 is a block diagram of an appearance inspection apparatus according to embodiments of the present invention.

The appearance inspection apparatus 1000 according to embodiments of the present invention may include at least one processor 1010, a memory 1020 that stores at least one command executed through the processor, and a transceiver 1030 that is connected to a network and performs communication.

Here, the at least one instruction may include an instruction to obtain and pre-process an image of appearance of a target object; an instruction to extract a region of interest from the preprocessed image and to perform brightness correction on the extracted region of interest; an instruction to extract defective candidates from the brightness-corrected image; an instruction to perform image post-processing on the extracted defective candidates; and an instruction to determine whether the target object is defective from the post-processed image.

The appearance inspection apparatus according to embodiments of the present invention may cooperate with an imaging device capturing appearance of the target object, or the appearance inspection apparatus may include the imaging device. The imaging device according to embodiments of the present invention may be provided in the same or similar form as the devices shown in FIGS. 9, 10, 11a, and 11b.

The instruction to perform brightness correction on the extracted region of interest may include an instruction to calculate an average brightness of pixels within the extracted region of interest; an instruction to calculate a correction gain value based on the calculated average brightness and target brightness; and an instruction to correct brightness of each pixel according to the correction gain value.

The instruction to calculate a correction gain value based on the calculated average brightness and target brightness may include an instruction to calculate the correction gain value by dividing the target brightness by the average brightness.

The instruction to correct brightness of each pixel according to the correction gain value may include an instruction to multiply original brightness of each pixel by the correction gain value to correct the brightness of each pixel. The instruction to calculate the average brightness of pixels within the extracted region of interest may include an instruction to calculate the average brightness based on the number of pixels in the region of interest and brightness of each pixel.

The target brightness may be determined by a user.

Meanwhile, the instruction to perform brightness correction on the extracted region of interest may include an instruction to change a captured color image to a gray image before applying brightness correction to the captured color image.

The instruction to perform brightness correction on the extracted region of interest may include an instruction to separate the color image into R channel, G channel, and B channel, before applying brightness correction to a captured color image.

Therefore, the instruction to calculate the average brightness of pixels, the instruction to calculate the correction gain value, and the instruction to correct the brightness of each pixel may be performed for each of the R channel, G channel, and B channel.

The appearance inspection apparatus 1000 may further include an input interface device 1040, an output interface device 1050, a storage device 1060, etc. Respective components included in the appearance inspection apparatus 1000 may be connected by a bus 1070 and can communicate with each other.

The storage device 1060 may store at least one image produced in each step of the inspection method according to the present invention, such as a plurality of images captured by the imaging device, pre-processed images, and post-processed images. The image stored in the storage device 1060 may be provided to at least one processor 1010 when necessary during execution of the inspection method according to the present invention.

Here, the processor 1010 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the area of the present invention described in the appending claims.

## Claims

1. A computer implemented appearance inspection method of a product, the appearance inspection method comprising:
obtaining and pre-processing (S100) an image of appearance of a target object;
extracting a region of interest from the preprocessed image and performing (S200) brightness correction on the extracted region of interest;
extracting (S300) defective candidates from the brightness-corrected image;
performing (S400) image post-processing on the extracted defective candidates; and
determining (S500) whether the target object is defective from the post-processed image,
wherein the performing (S200) brightness correction on the extracted region of interest includes:
calculating an average brightness of pixels (S210) within the extracted region of interest;
calculating a correction gain value (S220) based on the calculated average brightness and target brightness; and
correcting brightness of each pixel (S230) according to the correction gain value,
wherein the performing (S200) brightness correction on the extracted region of interest includes:
separating the color image into R channel, G channel, and B channel, before applying brightness correction to a captured color image,
wherein the calculating the average brightness of pixels (S210), the calculating the correction gain value (S220), and the correcting the brightness of each pixel (S230) are performed for each of the R channel, G channel, and B channel.

2. The appearance inspection method of claim 1, wherein the calculating the correction gain value (S220) based on the calculated average brightness and target brightness includes:
calculating the correction gain value by dividing the target brightness by the average brightness.

3. The appearance inspection method of claim 1, wherein the correcting the brightness of each pixel (S230) according to the correction gain value (S220) includes:
multiplying original brightness of each pixel by the correction gain value to correct the brightness of each pixel.

4. The appearance inspection method of claim 1, wherein the target brightness is determined by a user.

5. The appearance inspection method of claim 1, wherein the calculating the average brightness of pixels (S210) within the extracted region of interest includes:
calculating the average brightness based on the number of pixels in the region of interest and brightness of each pixel.

6. The appearance inspection method of claim 1, wherein the performing (S200) brightness correction on the extracted region of interest includes:
changing a captured color image to a gray image before applying brightness correction to the captured color image.

7. An appearance inspection apparatus (1000) of a product, the appearance inspection apparatus (1000) comprising:
at least one processor (1010); and
a memory (1020) configured to store at least one instruction executed by the at least one processor (1010),
wherein the at least one instruction includes:
an instruction to obtain and pre-process an image of appearance of a target object;
an instruction to extract a region of interest from the preprocessed image and to perform brightness correction on the extracted region of interest;
an instruction to extract defective candidates from the brightness-corrected image;
an instruction to perform image post-processing on the extracted defective candidates; and
an instruction to determine whether the target object is defective from the post-processed image,
wherein the instruction to perform brightness correction on the extracted region of interest includes:
an instruction to calculate an average brightness of pixels within the extracted region of interest;
an instruction to calculate a correction gain value based on the calculated average brightness and target brightness; and
an instruction to correct brightness of each pixel according to the correction gain value,
wherein the instruction to perform brightness correction on the extracted region of interest includes:
an instruction to separate the color image into R channel, G channel, and B channel, before applying brightness correction to a captured color image,
wherein the instruction to calculate the average brightness of pixels, the calculating the correction gain value, and the correcting the brightness of each pixel is performed for each of the R channel, G channel, and B channel.

8. The appearance inspection apparatus (1000) of claim 7, wherein the apparatus cooperates with an imaging device (200) capturing appearance of the target object, or
wherein the appearance inspection apparatus (1000) includes the imaging device (200).

9. The appearance inspection apparatus (1000) of claim 8, wherein the instruction to calculate the correction gain value based on the calculated average brightness and target brightness includes:
an instruction to calculate the correction gain value by dividing the target brightness by the average brightness.

10. The appearance inspection apparatus (1000) of claim 8, wherein the instruction to correct the brightness of each pixel according to the correction gain value includes:
an instruction to multiply original brightness of each pixel by the correction gain value to correct the brightness of each pixel.

11. The appearance inspection apparatus (1000) of claim 8, wherein the target brightness is determined by a user.

## Patentansprüche

1. Computerimplementiertes Erscheinungsbildinspektionsverfahren eines Produkts, wobei das Erscheinungsbildinspektionsverfahren Folgendes umfasst:
Erhalten und Vorverarbeiten (S100) eines Bilds des Erscheinungsbilds eines Zielobjekts;
Extrahieren eines interessierenden Bereichs aus dem vorverarbeiteten Bild und Durchführen (S200) einer Helligkeitskorrektur an dem extrahierten interessierenden Bereich;
Extrahieren (S300) fehlerhafter Kandidaten aus dem helligkeitskorrigierten Bild;
Durchführen (S400) einer Bildnachverarbeitung an den extrahierten fehlerhaften Kandidaten; und
Bestimmen (S500), ob das Zielobjekt fehlerhaft ist, aus dem nachverarbeiteten Bild,
wobei das Durchführen (S200) einer Helligkeitskorrektur an dem extrahierten interessierenden Bereich Folgendes beinhaltet:
Berechnen einer durchschnittlichen Helligkeit von Pixeln (S210) innerhalb des extrahierten interessierenden Bereichs;
Berechnen eines Korrekturverstärkungswerts (S220) basierend auf der berechneten durchschnittlichen Helligkeit und Zielhelligkeit; und
Korrigieren der Helligkeit jedes Pixels (S230) gemäß dem Korrekturverstärkungswert,
wobei das Durchführen (S200) einer Helligkeitskorrektur an dem extrahierten interessierenden Bereich Folgendes beinhaltet:
Trennen des Farbbilds in einen R-Kanal, einen G-Kanal und einen B-Kanal vor dem Anwenden einer Helligkeitskorrektur auf ein aufgenommenes Farbbild,
wobei das Berechnen der durchschnittlichen Helligkeit von Pixeln (S210), das Berechnen des Korrekturverstärkungswerts (S220) und das Korrigieren der Helligkeit jedes Pixels (S230) für jeden des R-Kanals, des G-Kanals und des B-Kanals durchgeführt werden.

2. Erscheinungsbildinspektionsverfahren nach Anspruch 1, wobei das Berechnen des Korrekturverstärkungswerts (S220) basierend auf der berechneten durchschnittlichen Helligkeit und Zielhelligkeit Folgendes beinhaltet:
Berechnen des Korrekturverstärkungswerts durch Dividieren der Zielhelligkeit durch die durchschnittliche Helligkeit.

3. Erscheinungsbildinspektionsverfahren nach Anspruch 1, wobei das Korrigieren der Helligkeit jedes Pixels (S230) gemäß dem Korrekturverstärkungswert (S220) Folgendes beinhaltet:
Multiplizieren der ursprünglichen Helligkeit jedes Pixels mit dem Korrekturverstärkungswert, um die Helligkeit jedes Pixels zu korrigieren.

4. Erscheinungsbildinspektionsverfahren nach Anspruch 1, wobei die Zielhelligkeit von einem Benutzer bestimmt wird.

5. Erscheinungsbildinspektionsverfahren nach Anspruch 1, wobei das Berechnen der durchschnittlichen Helligkeit von Pixeln (S210) innerhalb des extrahierten interessierenden Bereichs Folgendes beinhaltet:
Berechnen der durchschnittlichen Helligkeit basierend auf der Anzahl von Pixeln in dem interessierenden Bereich und der Helligkeit jedes Pixels.

6. Erscheinungsbildinspektionsverfahren nach Anspruch 1, wobei das Durchführen (S200) einer Helligkeitskorrektur an dem extrahierten interessierenden Bereich Folgendes beinhaltet:
Ändern eines aufgenommenen Farbbilds in ein Graubild vor dem Anwenden einer Helligkeitskorrektur auf das aufgenommene Farbbild.

7. Erscheinungsbildinspektionsvorrichtung (1000) eines Produkts, wobei die Erscheinungsbildinspektionsvorrichtung (1000) Folgendes umfasst:
mindestens einen Prozessor (1010); und
einen Speicher (1020), der konfiguriert ist, um mindestens eine Anweisung zu speichern, die von dem mindestens einen Prozessor (1010) ausgeführt wird,
wobei die mindestens eine Anweisung Folgendes beinhaltet:
eine Anweisung zum Erhalten und Vorverarbeiten eines Bilds des Erscheinungsbilds eines Zielobjekts;
eine Anweisung zum Extrahieren eines interessierenden Bereichs aus dem vorverarbeiteten Bild und zum Durchführen einer Helligkeitskorrektur an dem extrahierten interessierenden Bereich;
eine Anweisung zum Extrahieren fehlerhafter Kandidaten aus dem helligkeitskorrigierten Bild;
eine Anweisung zum Durchführen einer Bildnachverarbeitung an den extrahierten fehlerhaften Kandidaten; und
eine Anweisung zum Bestimmen, ob das Zielobjekt fehlerhaft ist, aus dem nachverarbeiteten Bild,
wobei die Anweisung zum Durchführen einer Helligkeitskorrektur an dem extrahierten interessierenden Bereich Folgendes beinhaltet:
eine Anweisung zum Berechnen einer durchschnittlichen Helligkeit von Pixeln innerhalb des extrahierten interessierenden Bereichs;
eine Anweisung zum Berechnen eines Korrekturverstärkungswerts basierend auf der berechneten durchschnittlichen Helligkeit und Zielhelligkeit; und
eine Anweisung zum Korrigieren der Helligkeit jedes Pixels gemäß dem Korrekturverstärkungswert,
wobei die Anweisung zum Durchführen einer Helligkeitskorrektur an dem extrahierten interessierenden Bereich Folgendes beinhaltet:
eine Anweisung zum Trennen des Farbbilds in einen R-Kanal, einen G-Kanal und einen B-Kanal vor dem Anwenden einer Helligkeitskorrektur auf ein aufgenommenes Farbbild,
wobei die Anweisung zum Berechnen der durchschnittlichen Helligkeit von Pixeln, das Berechnen des Korrekturverstärkungswerts und das Korrigieren der Helligkeit jedes Pixels für jeden des R-Kanals, des G-Kanals und des B-Kanals durchgeführt werden.

8. Erscheinungsbildinspektionsvorrichtung (1000) nach Anspruch 7, wobei die Vorrichtung mit einer Bildgebungsvorrichtung (200) zusammenwirkt, die das Erscheinungsbild des Zielobjekts aufnimmt, oder
wobei die Erscheinungsbildinspektionsvorrichtung (1000) die Bildgebungsvorrichtung (200) beinhaltet.

9. Erscheinungsbildinspektionsvorrichtung (1000) nach Anspruch 8, wobei die Anweisung zum Berechnen des Korrekturverstärkungswerts basierend auf der berechneten durchschnittlichen Helligkeit und Zielhelligkeit Folgendes beinhaltet:
eine Anweisung zum Berechnen des Korrekturverstärkungswerts durch Dividieren der Zielhelligkeit durch die durchschnittliche Helligkeit.

10. Erscheinungsbildinspektionsvorrichtung (1000) nach Anspruch 8, wobei die Anweisung zum Korrigieren der Helligkeit jedes Pixels gemäß dem Korrekturverstärkungswert Folgendes beinhaltet:
eine Anweisung zum Multiplizieren der ursprünglichen Helligkeit jedes Pixels mit dem Korrekturverstärkungswert, um die Helligkeit jedes Pixels zu korrigieren.

11. Erscheinungsbildinspektionsvorrichtung (1000) nach Anspruch 8, wobei die Zielhelligkeit von einem Benutzer bestimmt wird.

## Revendications

1. Procédé informatisé d'inspection d'aspect d'un produit, le procédé d'inspection d'aspect comprenant :
l'obtention et le prétraitement (S100) d'une image de l'aspect d'un objet cible ;
l'extraction d'une zone d'intérêt de l'image prétraitée et l'exécution (S200) d'une correction de luminosité sur la zone d'intérêt extraite ;
l'extraction (S300) de candidats défectueux de l'image à luminosité corrigée ;
l'exécution (S400) d'un post-traitement d'image sur les candidats défectueux extraits ; et
la détermination (S500) d'une défectuosité éventuelle de l'objet cible d'après l'image post-traitée,
l'exécution (S200) de la correction de luminosité sur la zone d'intérêt extraite comprenant :
le calcul d'une luminosité moyenne des pixels (S210) au sein de la zone d'intérêt extraite ;
le calcul d'une valeur du gain de correction (S220) basée sur la luminosité moyenne et la luminosité cible calculées ; et
la correction de la luminosité de chaque pixel (S230) selon la valeur du gain de correction,
l'exécution (S200) de la correction de luminosité sur la zone d'intérêt extraite comprenant :
la séparation de l'image couleur en canal R, canal G, et canal B, avant l'application de la correction de luminosité sur une image couleur capturée,
le calcul de la luminosité moyenne des pixels (S210), le calcul de la valeur du gain de correction (S220), et la correction de la luminosité de chaque pixel (S230) étant effectués pour chacun du canal R, du canal G, et du canal B.

2. Procédé d'inspection d'aspect selon la revendication 1, le calcul de la valeur du gain de correction (S220) d'après la luminosité moyenne calculée et la luminosité cible comprenant :
le calculer de la valeur du gain de correction en divisant la luminosité cible par la luminosité moyenne.

3. Procédé d'inspection d'aspect selon la revendication 1, la correction de la luminosité de chaque pixel (S230) selon la valeur du gain de correction (S220) comprenant :
la multiplication de la luminosité d'origine de chaque pixel par la valeur du gain de correction pour corriger la luminosité de chaque pixel.

4. Procédé d'inspection d'aspect selon la revendication 1, la luminosité cible étant déterminée par un utilisateur.

5. Procédé d'inspection d'aspect selon la revendication 1, le calcul de la luminosité moyenne des pixels (S210) dans la zone d'intérêt extraite comprenant:
le calcul de la luminosité moyenne en fonction du nombre de pixels dans la zone d'intérêt et de la luminosité de chaque pixel.

6. Procédé d'inspection d'aspect selon la revendication 1, l'exécution (S200) de la correction de luminosité sur la zone d'intérêt extraite comprenant:
la changement d'une image couleur capturée en passant à une image grise avant l'application d'une correction de luminosité sur l'image couleur capturée.

7. Appareil d'inspection d'aspect (1000) d'un produit, l'appareil d'inspection d'aspect (1000) comprenant :
au moins un processeur (1010) ; et
une mémoire (1020) configurée pour stocker au moins une instruction exécutée par l'au moins un processeur (1010),
l'au moins une instruction comprenant :
une instruction pour obtenir et prétraiter une image de l'aspect d'un objet cible ;
une instruction pour extraire une zone d'intérêt de l'image prétraitée et exécuter une correction de luminosité sur la zone d'intérêt extraite ;
une instruction pour extraire des candidats défectueux de l'image à luminosité corrigée ;
une instruction pour effectuer un post-traitement d'image sur les candidats défectueux extraits ; et
une instruction pour déterminer si l'objet cible est défectueux d'après l'image post-traitée,
l'instruction pour l'exécution d'une correction de luminosité sur la zone d'intérêt extraite comprenant:
une instruction pour calculer une luminosité moyenne de pixels au sein de la zone d'intérêt extraite ;
une instruction pour calculer une valeur du gain de correction basée sur la luminosité moyenne et la luminosité cible calculées ; et
une instruction pour corriger la luminosité de chaque pixel d'après la valeur du gain de correction,
l'instruction pour l'exécution d'une correction de luminosité sur la zone d'intérêt extraite comprenant:
une instruction pour la séparation de l'image couleur en canal R, canal G et canal B, avant l'application de la correction de luminosité sur une image couleur capturée,
l'instruction pour le calcul de la luminosité moyenne des pixels, le calcul de la valeur du gain de correction, et la correction de la luminosité de chaque pixel étant effectués pour chacun du canal R, du canal G, et du canal B.

8. Appareil d'inspection d'aspect (1000) selon la revendication 7, l'appareil coopérant avec un dispositif d'imagerie (200) capturant l'aspect de l'objet cible, ou
l'appareil d'inspection d'aspect (1000) comprenant le dispositif d'imagerie (200).

9. Appareil d'inspection d'aspect (1000) selon la revendication 8, l'instruction pour le calcul de la valeur du gain de correction d'après la luminosité moyenne et la luminosité cible calculées comprenant :
une instruction pour le calcul de la valeur du gain de correction en divisant la luminosité cible par la luminosité moyenne.

10. Appareil d'inspection d'aspect (1000) selon la revendication 8, l'instruction pour la correction de la luminosité de chaque pixel selon la valeur du gain de correction comprenant :
une instruction pour multiplier la luminosité d'origine de chaque pixel par la valeur du gain de correction afin de corriger la luminosité de chaque pixel.

11. Procédé d'inspection d'aspect (1000) selon la revendication 8, la luminosité cible étant déterminée par un utilisateur.
